(19) Europäisches Patentamt
European Patent Office
Office européen des brevets

(11) **EP 4 390 758 B1**

(12) **EUROPÄISCHE PATENTSCHRIFT**

(45) Veröffentlichungstag und Bekanntmachung des Hinweises auf die Patenterteilung:
**11.03.2026 Patentblatt 2026/11**

(21) Anmeldenummer: **22215272.0**

(22) Anmeldetag: **21.12.2022**

(51) Internationale Patentklassifikation (IPC):
**G06K 7/14** *(2006.01)*

(52) Gemeinsame Patentklassifikation (CPC):
**G06K 7/1408**

(54) **OPTISCHER SENSOR**

OPTICAL SENSOR

CAPTEUR OPTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**26.06.2024 Patentblatt 2024/26**

(73) Patentinhaber: **Leuze electronic GmbH + Co. KG**
**73277 Owen/Teck (DE)**

(72) Erfinder:
• **Droemer, Jörg**
**72574 Bad Urach-Wittlingen (DE)**
• **Sanzi, Friedrich**
**73230 Kirchheim/Teck (DE)**

(74) Vertreter: **Ruckh, Rainer Gerhard**
**Patentanwaltskanzlei Ruckh**
**Jurastraße 1**
**73087 Bad Boll (DE)**

(56) Entgegenhaltungen:
DE-A1- 102019 217 980    US-A1- 2006 038 017
US-A1- 2006 213 999    US-A1- 2013 068 841

EP 4 390 758 B1

**Beschreibung**

Die Erfindung betrifft einen optischen Sensor und ein Verfahren zur Erfassung von 4-Breiten-Barcodes mittels eines optischen Sensors.

Derartige optische Sensoren weisen generell eine Lichtstrahlen emittierende Sendereinheit, eine Lichtstrahlen empfangende Empfängereinheit und eine Auswerteeinheit zur Auswertung von Empfangssignalen der Empfängereinheit auf. Der optische Sensor kann als Scanner oder kamerabasierter Sensor ausgebildet werden.

Mit dem optischen Sensor werden Barcodes erfasst, die generell aus einer Folge von Zeichen, d.h. Codeelementen in Form von Strichen und Lücken bestehen. Dabei können unterschiedliche Barcodes vorhanden sein, die sich durch die Strukturen der Codeelemente unterscheiden.

Die Barcodes werden generell derart klassifiziert, dass der Strich oder die Lücke mit der kleinsten Breite das Modul des Barcodes bildet. Weiterhin ist das Ratio des Barcodes derart definiert, dass dieses angibt, wieviel breiter der jeweilige Strich oder die jeweilige Lücke als das Modul ist.

Die Erfindung bezieht sich auf die Erfassung von 4-Breiten-Barcodes, bei denen die Breiten der Striche 1M, 2M, 3M oder 4M betragen, wobei M die Modulbreite ist.

Die Breiten der Codeelemente (Zeichen) sind in Form einer Decodiertabelle in der Auswerteeinheit des optischen Sensors abgespeichert.

Die Erfassung der Barcodes erfolgt typischerweise derart, dass in der Auswerteeinheit aus den Empfangssignalen der Empfängereinheit ein digitales Signal generiert wird. Die Signalzustände 0 und 1 des digitalen Signals werden bei Detektion eines (dunklen) Strichs bzw. einer (hellen) Lücke erhalten. Die Signalwechsel des digitalen Signals von 1 auf 0 bzw. 0 auf 1 definieren Kantenlagen zwischen Strichen und Lücken.

In der Auswerteeinheit werden Abstände benachbarter Kantenlagen, sogenannte Edge-to-Edge-Abstände, im digitalen Signal bestimmt und dann mit den in der Decodiertabelle abgelegten Breiten der Codeelemente verglichen. Kann anhand dieses Vergleichs jeder Folge von Edge-to-Edge-Abständen ein Codeelement zugeordnet werden, gilt der jeweilige Barcode als erkannt.

Um diese Erfassung der Barcodes fehlertolerant zu gestalten wird eine Folge von Edge-to-Edge-Abständen als passend zu einem Codeelement beurteilt, wenn die Edge-to-Edge-Abstände innerhalb vorgegebener Toleranzgrenzen mit der Breite der Elemente (d.h. Strichen oder Lücken) des jeweiligen Codeelements übereinstimmen.

Trotz dieser Vorgehensweise kann es infolge von Verschmutzungen oder Beschädigungen oder durch zu breiten bzw. zu schmalen Druck der Striche oder Lücken von Barcodes dazu kommen, dass eine Folge von Edge-to-Edge-Abständen im digitalen Signal keinem Codeelement zugeordnet werden kann. Dann gilt der Barcode als nicht erkannt, d.h. es liegt eine Fehllesung vor.

Die US 2006/0213999 A1 betrifft ein Barcodelesegerät, welches als Sensoreinheit ein Kamerasystem umfasst. Ein Bild, das mit dem Kamerasystem aufgenommen wird, wird digitalisiert und so in eine Folge von dunklen und hellen Barcodeelemente gewandelt. Anschließend werden die Kantenlagen der Barcodeelemente ermittelt und mit abgespeicherten Codeinformationen verglichen, um den Barcode zu detektieren. Dieses Dokument wird von den jeweiligen Präambeln der unabhängigen Ansprüche reflektiert.

Die US 2006/0038017 A1 betrifft ein automatisches Fokussiersystem für ein kamerabasiertes Barcodelesegerät.

Die US 2013/0068841 A1 betrifft einen Barcodeleser in Form eines optischen Scanners. Die bei der Abtastung eines Codes mittels des Scanners erhaltenen Signale werden ausgewertet, um Codesequenzen zu erhalten. Diese werden mit gespeicherten Codesequenzen verglichen.

Die DE 10 2019 217 960 A1 betrifft ein Barcodelesegerät, das als kamerabasiertes Gerät oder als Scanner ausgebildet sein kann. Ein mit dem Barcodelesegerät ermitteltes Pixelgitter wird mit einem Modulgitter auf Vorliegen von Kausalzusammenhänge untersucht, um einen Barcode zu dekodieren.

Der Erfindung liegt die Aufgabe zugrunde einen optischen Sensor der eingangs genannten Art bereitzustellen, damit dann eine sichere Erfassung von Barcodes ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von 4-Breiten-Barcodes mit einer Lichtstrahlen emittierenden Sendereinheit, mit einer Lichtstrahlen empfangenden Empfängereinheit, mit einer Auswerteeinheit, in welcher Empfangssignale der Empfängereinheit ausgewertet werden. Jeder Barcode weist eine Folge von Codeelementen mit Elementen vorgegebener Breiten auf, wobei die Breiten der Elemente der Codeelemente jedes Barcodes in Form einer Decodiertabelle in der Auswerteeinheit abgespeichert sind. In der Auswerteeinheit wird aus den Empfangssignalen der Empfängereinheit ein digitales Signal generiert, wobei Kantenlagen von Codeelementen durch Wechsel von Signalzuständen des digitalen Signals detektiert werden. Eine vom Abstand benachbarter Kantenlagen gebildete Folge von Edge-to-Edge-Abständen $e_1$ wird einem Codeelement zugeordnet, wenn diese Folge von Edge-to-Edge-Abständen $e_1$ innerhalb vorgegebener Toleranzgrenzen mit den Breiten der Elemente dieses Codeelements übereinstimmt. Ein Barcode ist in der Auswerteeinheit dann erkannt, wenn jedem Codeelement des Barcodes eine Folge von Edge-to-Edge-Abständen $e_1$ zugeordnet werden kann. Ein Barcode ist auch dann erkannt, wenn nach einer Methode der kleinsten Abweichungen der Edge-to-Edge-Abstände $e_1$ bezüglich den Breiten der Elemente der Codeelemente eines Barcodes wenigstens ein Codeelement der Folge der Edge-to-Edge-Abstände zugeordnet werden kann, und wenn die restlichen Codeelemente jeweils einer Folge von Edge-to-Edge-Abständen $e_1$ dadurch zugeordnet werden können, dass die jeweiligen Edge-to-Edge-Abstände innerhalb vorgegebener Toleranzgrenzen mit den Breiten der Elemente des jeweiligen Codeelements übereinstimmen.

Die Erfindung betrifft auch ein entsprechendes Verfahren.

Der erfindungsgemäße optische Sensor dient zur Erfassung von 4-Breiten-Barcodes und bildet mit diesen eine Sensoreinheit. Bei 4-Breiten-Barcodes betragen die Breiten dieser Elemente in Form von Strichen und Lücken 1M, 2M, 3M oder 4M, wobei M die Modulbreite, d.h. die Breite des kleinsten Elements ist.

Mit den optoelektronischen Komponenten, d.h. der Sendereinheit und der Empfängereinheit, werden zu detektierende Barcodes optisch abgetastet.

In der Auswerteeinheit wird aus den Empfangssignalen der Empfängereinheit ein digitales Signal generiert, beispielsweise durch eine Schwellwertbewertung. Jeder Barcode weist eine Folge mit hellen und dunklen Elementen, in Form von Striche und Lücken auf. Die Signalzustände 1 und 0 des digitalen Signals entsprechen den hellen bzw. dunklen Elementen.

Die Wechsel der Signalzustände des digitalen Signals von 0 auf 1 bzw. 1 auf 0 entsprechen den Kantenlagen der Elemente.

In an sich bekannter Weise werden aus dem digitalen Signal Edge-to-Edge-Abstand, d.h. Abstände aufeinander folgender Kantenlagen, d.h. Signalwechsel des digitalen Signals bestimmt. Diese Edge-to-Edge-Abstände werden mit Breiten der Elemente der Codeelemente (Zeichen) eines Barcodes, die in einer Decodiertabelle in der Auswerteeinheit hinterlegt sind, verglichen. Der Vergleich erfolgt innerhalb eingegebener Toleranzgrenzen. Die Codeelemente, deren Breiten der Elemente innerhalb der Toleranzgrenzen mit den Edge-to-Edge-Abständen übereinstimmen, gelten als erkannt.

Die Codeelemente, für die bei diesem Vergleich keine Übereinstimmung mit Edge-to-Edge-Abständen des digitalen Signals gefunden wird, werden erfindungsgemäß nach einer Methode der kleinsten Abweichungen geprüft, ob eine Folge von Edge-to-Edge-Abständen dem jeweiligen Codeelement zugeordnet werden kann. Ist dies der Fall gilt der Barcode als erkannt.

Im Gegensatz zu bekannten optischen Sensoren wird damit eine erhöhte Fehlersicherheit und Unempfindlichkeit gegenüber Verschmutzungen oder Beschädigungen der Barcodes erhalten, da nach der Methode der kleinsten Abweichungen auch in gestörten digitalen Signalen Edge-to-Edge-Abstände noch Codeelementen von Barcodes zugeordnet werden können.

Mit dem erfindungsgemäßen optischen Sensor können damit auch fehlerbehaftete Barcodes noch sicher erkannt werden.

Gemäß einer ersten Ausgestaltung weist der optische Sensor als Sendereinheit eine Beleuchtungseinheit und als Empfängereinheit einen Bildsensor auf.

Gemäß einer zweiten Ausgestaltung weist dieser als Sendereinheit einen Sender und als Empfängereinheit einen Empfänger aus, wobei vom Sender emittierte Lichtstrahlen mittels einer Ablenkeinheit abgelenkt und periodisch innerhalb eines Erfassungsbereichs geführt sind.

Typischerweise sind die Codeelemente eines Barcodes von Strichen und Lücken gebildet.

Zweckmäßig kann dann ein Codeelement von einem Strich und einer darauffolgenden Lücke gebildet sein oder umgekehrt sein.

Denn ein Edge-to-Edge-Abstand ist durch zwei aufeinanderfolgende Signalzustandsänderungen in gleicher Richtung definiert.

Besonders vorteilhaft sind in der Auswerteeinheit mehrere Decodiertabellen für unterschiedliche Barcodes gespeichert.

Dann können dementsprechend mit dem optischen Sensor unterschiedliche Typen von Barcodes erfasst werden.

Gemäß einer besonders vorteilhaften Ausführungsform erfolgt eine Zuordnung eines Codeelements eines Barcodes zu der Folge von Edge-to-Edge-Abständen nach der Methode der kleinsten quadratischen Abweichungen.

Prinzipiell ist es auch möglich, dass eine Zuordnung eines Codeelements eines Barcodes zu der Folge von Edge-to-Edge-Abständen nach der Methode der betragsmäßig kleinsten Abweichungen erfolgt.

In beiden Fällen werden zur Berechnung der kleinsten Abweichungen mittels Abweichungsfunktionen für Codeelemente Abweichungskoeffizienten berechnet. Das Codeelement wird als erkannt ausgewählt, welches den kleinsten Abweichungskoeffizient liefert.

Die den Abweichungskoeffizient bestimmende Abweichungsfunktion enthält die quadratischen Abweichungen oder betragsmäßigen Abweichungen der einzelnen Edge-to-Edge-Abstände zu den Breiten der Elemente des Codeelements, für welchen der Abweichungskoeffizient bestimmt werden soll, wobei über alle Edge-to-Edge-Abstände aufsummiert wird.

Als erste Einschränkung bei dieser Erkennung eines Codeelements im digitalen Signal, d.h. der Folge von Edge-to-Edge-Abständen, kann vorgegeben werden, dass ein Codeelement nur dann als erkannt gilt, wenn dessen Abweichungskoeffizient einen vorgegebenen Schwellwert nicht überschreitet.

Dadurch wurden die zulässigen Fehler bei der Barcodedetektion begrenzt, indem gefordert wird, dass die Abweichungen der Edge-to-Edge-Abstände von der Breite der Elemente eines Codeelements nicht zu groß sein dürfen.

Eine weitere Einschränkung bei der Identifizierung von Codeelementen mittels der Methode der kleinsten Abweichungen kann dadurch vorgegeben werden, dass ein Barcode nur dann erkannt ist, wenn maximal ein Codeelement nach der Methode der kleinsten Abweichungen erfasst wird.

Damit wird gefordert, dass der Barcode nur lokal im Bereich eines Codeelements eine Störung aufweisen darf, die dort eine Breitenbestimmung mittels des Vergleichs von Edge-to-Edge-Abständen mit Breiten der Elemente der Codeelemente innerhalb der Toleranzgrenze unmöglich macht.

Gemäß einer vorteilhaften Ausgestaltung werden für alle Codeelemente eines Barcodes Abweichungskoeffizienten berechnet.

Gemäß einer alternativen Ausgestaltung werden nur für einen Teil der Codeelemente eines Barcodes Abweichungskoeffizienten berechnet.

In diesem Fall erfolgt die Suche von Codeelementen nach der Methode der kleinsten Abweichungen nur für einen Teil von Codeelementen, d.h. es werden vorab einige Codeelemente von der Suche ausgeschlossen.

Dies kann vorteilhaft dadurch erfolgen, dass nur für die Codeelemente Abweichungskoeffizienten berechnet werden, für welche die Summen der Differenzen der Edge-to-Edge-Abstände und den Breiten der Elemente der Codeelemente einen vorgegebenen Schwellwert nicht überschreiten.

Die Erfindung wird im Folgenden anhand der Zeichnungen erläutert. Es zeigen:

Figur 1: Erstes Ausführungsbeispiel des erfindungsgemäßen optischen Sensors.

Figur 2: Zweites Ausführungsbeispiel des erfindungsgemäßen optischen Sensors.

Figur 3: Teildarstellung eines Barcodes

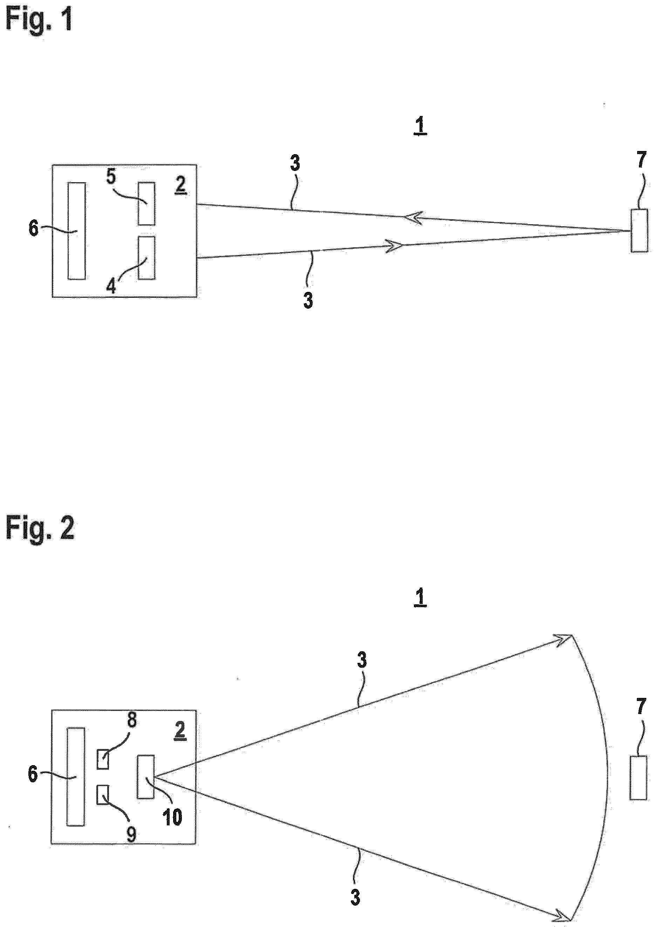

Figur 1 zeigt ein stark schematisiertes erstes Beispiel des erfindungsgemäßen optischen Sensors 1. Die Komponenten des optischen Sensors 1 sind in einem Gehäuse 2 integriert. Der optische Sensor 1 ist im vorliegenden Fall als kamerabasierter Sensor ausgebildet. Der optische Sensor 1 weist als Sendereinheit eine Lichtstrahlen 3 emittierende Beleuchtungseinheit 4 auf, die eine Anzahl von Leuchtdioden ausweisen kann. Weiterhin ist als Empfängereinheit ein Bildsensor 5 vorhanden, der z.B. in Form eines CCD- oder CMOS-Arrays ausgebildet sein kann. Weiterhin ist eine Auswerteeinheit 6 zur Auswertung von Empfangssignalen der Empfängereinheit vorhanden. Die Auswerteeinheit 6 kann von einem Mikroprozessor oder dergleichen gebildet sein.

Der optische Sensor 1 dient zur Erfassung von Barcodes 7. Die Lichtstrahlen 3 der Beleuchtungseinheiten 4 werden durch ein Fenster im Gehäuse 2 in einem Erfassungsbereich geführt. Die an einem Barcode 7 reflektierten Lichtstrahlen 3 werden durch das Fenster zum Bildsensor 5 geführt.

Figur 2 zeigt ein zweites Beispiel des optischen Sensors 1, wobei der optische Sensor 1 in diesem Fall ein scannender Sensor ist. Der optische Sensor 1 gemäß Figur 2 umfasst als Sendereinheit einen Lichtstrahlen 3 emittierenden Sender 8 in Form einer Laserdiode oder Leuchtdiode, und als Empfängereinheit einen Empfänger 9, der von einer Photodiode gebildet sein kann. Die Lichtstrahlen 3 werden mittels einer Ablenkeinheit 10 periodisch innerhalb eines Erfassungsbereichs geführt. Auch in diesem Fall sind die Komponenten des optischen Sensors 1 in einem Gehäuse 2 mit Fenster integriert. Im Gehäuse 2 ist auch die Auswerteeinheit 6 untergebracht.

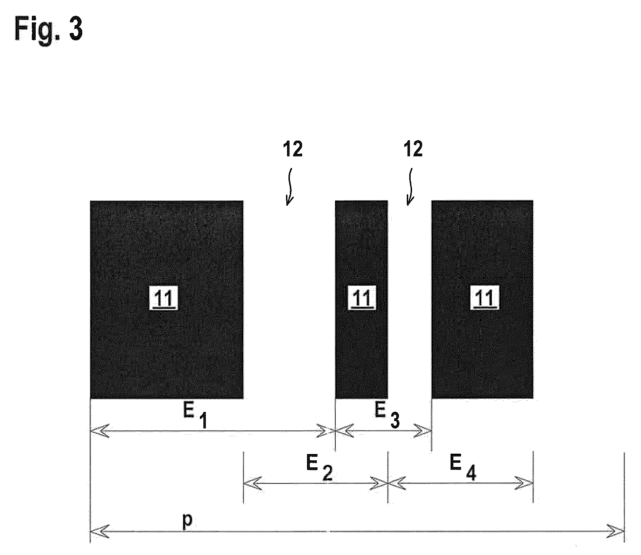

Figur 3 zeigt einen Ausschnitt eines Barcodes 7 in Form eines Codes 128. Alternativ sind auch andere Typen von Barcodes 7 möglich wie Codearten 128.

Generell besteht ein Barcode 7 aus Codeelementen (Zeichen) bildenden Strichen 11 und Lücken 12. Die Breite des kleinsten Elements in Form eines Strichs 11 oder einer Lücke 12 heißt Modul. Die weiteren Elemente sind um ein vorgegebenes Verhältnis (das sogenannte Ratio) breiter als das Modul.

Diese Kenngrößen zusammen mit Start- und Stoppzeichen kennzeichnen einen Barcodetyp eindeutig und sind in Form von Decodiertabellen in der Auswerteeinheit 6 abgespeichert.

Mit dem erfindungsgemäßen Verfahren können 4-Breiten-Barcodes erfasst werden, deren Striche 11 oder Lücken 12 1M, 2M, 3M oder 4M bereit sind, wobei M die Modulbreite ist.

Wie aus Figur 3 ersichtlich sind, weist der Barcode 7 unterschiedliche Elemente, gebildet jeweils von einem Strich 11 und einer benachbarten Lücke 12, auf, die vorgegebene Breiten E1-E4 aufweisen, die in der Decodiertabelle der Auswerteeinheit 6 abgespeichert sind.

Die Gesamtlänge eines Codeelements des Barcodes 7 ist mit p bezeichnet.

Die Auswertung der Empfangssignale der Empfängereinheit des optischen Sensors 1 gemäß Figur 1 oder 2 erfolgt derart, dass aus den Empfangssignalen ein digitales Signal gewonnen wird, beispielsweise durch eine Schwellwertbewertung. Die Bereiche des digitalen Signals mit dem Signalwert 1 entsprechen den Lücken 12 des detektierten Barcodes 7, die Bereiche des digitalen Signals mit dem Signalwert 0 entsprechenden den Strichen 11 des detektierten Barcodes 7. Die Signalwechsel des digitalen Signals von 0 auf 1 oder 1 auf 0 entsprechen den Kantanlagen des Barcodes 7, d.h. Übergängen zwischen Strichen 11 und Lücken 12.

Für die Decodierung eines Barcodes 7 werden aus dem digitalen Signal die Edge-to-Edge-Abstände $e_1$ gewonnen, d.h. die Abstände zwischen zwei aufeinanderfolgenden gleichen Signalwechsel von 0 auf 1 (oder 1 auf 0).

Für die folgende Betrachtung wird ein Codeelement eines Barcodes 7 herangezogen, welches 11 Module lang ist. Durch die Multiplikation der Edge-to-Edge-Abstände $e_1$, mit dem Faktor $m = \frac{p}{11}$ sind die Edge-to-Edge-Abstände $e_1$ auf die Länge eines Codeelements 7 normiert.

Im vorliegenden Fall weisen die Codeelemente des Barcodes 7 sieben unterschiedliche Elemente mit unterschiedlichen Breiten $E_1$ (i = 1...7) auf.

In einem ersten Decodierschritt werden die einzelnen normierten Edge-to-Edge-Abstände $e_1$ diesen Breiten $E_i$ der Codeelemente wie folgt durch Vorgabe von Toleranzgrenzen zugewiesen.

$$
\begin{aligned}
E_i &= 2 \text{ falls } 1{,}5 \cdot \frac{p}{11} \leq e_i \leq 2{,}5 \cdot \frac{p}{11} \\
E_i &= 3 \text{ falls } 2{,}5 \cdot \frac{p}{11} \leq e_i \leq 3{,}5 \cdot \frac{p}{11} \\
E_i &= 4 \text{ falls } 3{,}5 \cdot \frac{p}{11} \leq e_i \leq 4{,}5 \cdot \frac{p}{11} \\
E_i &= 5 \text{ falls } 4{,}5 \cdot \frac{p}{11} \leq e_i \leq 5{,}5 \cdot \frac{p}{11} \\
E_i &= 6 \text{ falls } 5{,}5 \cdot \frac{p}{11} \leq e_i \leq 6{,}5 \cdot \frac{p}{11} \\
E_i &= 7 \text{ falls } 6{,}5 \cdot \frac{p}{11} \leq e_i \leq 7{,}5 \cdot \frac{p}{11}
\end{aligned}
\qquad [1]
$$

Werden für alle in der Decodiertabelle abgespeicherten Breiten $E_i$ innerhalb der oben angeführten Toleranzgrenze passende Edge-to-Edge-Abstände $e_i$ gemäß Gleichung [1] gefunden, gilt der Barcode 7 als erkannt.

Gelingt für eine zuvor festgelegte Anzahl von Breiten $E_i$ keine Zuordnung eines Edge-to-Edge-Abstands $e_1$, wird erfindungsgemäß nach einer Methode der kleinsten Abweichungen versucht, eine Zuordnung von Codeelementen zu den Edge-to-Edge-Abständen $e_1$ des digitalen Signals herzustellen.

Die Auswerteeinheit 6 weist hierzu einen Least-Squares-Decoder auf.

Zu jedem Zeichen eines Barcodes 7 in der Decodiertabelle, d.h. für jede zulässige Folge von Codeelementen dieses Barcodes 7 wird mit dem Least-Squares-Decoder die Summe der quadratischen Abweichungen zwischen den einzelnen Kanten-Positionen des normierten Zeichens, d.h. den Edge-to-Edge-Abständen $e_1$ und dem betrachteten Zeichen der Decodier-Tabelle ermittelt. Als Decodier-Ergebnis gilt das Zeichen, welches die kleinste quadratische Abweichung hat. Anstelle der quadratischen Abweichung kann auch der Betrag der Abweichung herangezogen werden. Um Rechenzeit zu sparen, kann die Funktion zur Berechnung einer einzelnen Kantenabweichung auch als Tabelle ausgeführt werden.

Genauer betrachtet bestimmt der Least-Squares-Decoder einen Wert $D_k$ für jedes Zeichen $Z_k$ des Zeichenvorrats der Decodiertabelle unter Verwendung der Edge-to-Edge-Abstände $e_1$.

$$
D_k = \sum_{i=1}^{N} f\left(\frac{11}{p} \cdot e_i - E_{i,Z_k}\right) \qquad [2]
$$

Dabei ist der Modulindex der Edge-to-Edge-Abstände $e_1$ innerhalb der Decodiertabelle.

In Gleichung [2] steht $E_{i,Z_k}$ für die $i$-te normierte Breite eines Elements des Zeichens $k$ innerhalb der Decodiertabelle. Für die Funktion $f(x)$ in Gleichung [2] gilt:

$$
f(x) = x^2 \qquad [3]
$$

Es sind aber auch andere Funktionen denkbar, wie z. B.:

$$
f(x) = |x| \qquad [4]
$$

Der Least-Squares-Decoder wählt dann das Zeichen $Z_{k_m}$ aus, welches den kleinsten Wert $D_k$ liefert.

$$k_m = \min_k D_k \qquad [5]$$

Durch die Auswahl des Zeichens $Z_{k_m}$ für die Breiten $e_i$, kann der Barcode 7 letztendlich gelesen werden.

Um die Lesesicherheit zu erhöhen und die Verarbeitungsdauer zu reduzieren, kann die Suche in Gleichung [5] in der Weise eingeschränkt werden, dass für die normierten Breiten $e_i$ nicht der gesamte Zeichenvorrat verwendet wird, sondern die Suche nur über einen Teilbereich erfolgt. Dazu kann vorab ermittelt werden, welche Zeichen $Z_k$ aus dem Zeichenvorrat den normierten Breiten $e_i$ zugeordnet werden dürfen. Als Kriterium für die Einschränkung kann z. B. die Summe der Abweichung zwischen den Breiten $e_i$ und $E_{i,Z_k}$ dienen, die einen bestimmten Schwellwert nicht überschreiten darf. Durch die Einschränkung des Zeichenvorrats ist es möglich, dass für manche Breiten $e_i$ kein Zeichen zugeordnet werden kann.

Eine weitere Einschränkung des Least-Squares-Decoders kann in der Art und Weise erfolgen, dass in einem Barcode 7 nur ein Zeichen mit Hilfe des Least-Squares-Decoders bestimmt werden darf. Damit wird ein Barcode 7 auch weiterhin nicht gelesen, falls zwei oder mehr Zeichen nicht über die Decodier-Tabelle zugeordnet werden können. Durch diese Einschränkung wird die Lesesicherheit erhöht.

Um den Least-Squares-Decoder weiter einzuschränken, kann der Wert $D_{k_m}$ begrenzt werden:

$$D_{k_m} \leq D_{\max} \qquad [6]$$

Dabei stellt $D_{\max}$ in Gleichung [6] eine obere Grenze dar. Wird Gleichung [6] erfüllt, wird das Zeichen $Z_{k_m}$ verwendet. Ansonsten wird das Zeichen nicht erkannt, und das Barcode-Label ist nicht lesbar. Darüber hinaus ist es zusätzlich denkbar, dass für $D_{k_m}$ gilt:

$$(1 + p) \cdot D_{k_m} \leq D_k \ k\backslash\{k_m\} \text{ mit } 0 \leq p \qquad [7]$$

Durch Gleichung [7] wird die Auswahl für das Zeichen $Z_{k_m}$ weiter abgesichert.

Bezugszeichenliste

(1) optischer Sensor
(2) Gehäuse
(3) Lichtstrahl
(4) Beleuchtungseinheit
(5) Bildsensor
(6) Auswerteeinheit
(7) Barcode
(8) Sender
(9) Empfänger
(10) Ablenkeinheit
(11) Striche
(12) Lücke

**Patentansprüche**

1. Optischer Sensor (1) zur Erfassung von 4-Breiten-Barcodes (7) mit einer Lichtstrahlen (3) empfangenden Empfängereinheit, mit einer Auswerteeinheit (6), in welcher Empfangssignale der Empfängereinheit ausgewertet werden, wobei jeder Barcode (7) eine Folge von Codeelementen mit Elementen vorgegebener Breiten aufweist, wobei die Breiten der Elemente Codeelemente jedes Barcodes (7) in Form einer Decodiertabelle in der Auswerteeinheit (6) abgespeichert sind, wobei in der Auswerteeinheit (6) aus den Empfangssignalen der Empfängereinheit ein digitales Signal generiert wird, wobei Kantenlagen von Codeelementen durch Wechsel von Signalzuständen des digitalen Signals detektiert werden, und wobei ein von einem Abstand benachbarter Kantenlagen gebildete Folge von Edge-to-Edge-Abstand ($e_1$) einem Codeelement zugeordnet wird, wenn diese Folge von Edge-to-Edge-Abständen ($e_1$) innerhalb vorgegebener Toleranzgrenzen mit den Breiten der Elemente dieses Codeelements übereinstimmt und wobei ein Barcode (7) dann erkannt ist, wenn jedem Codeelement des Barcodes (7) eine Folge von Edge-to-Edge-Abständen ($e_1$) zugeordnet werden kann, **dadurch gekennzeichnet, dass** der optische Sensor (1) eine Lichtstrahlen (3) emittierende Sendereinheit umfasst, und dass in der Auswerteeinheit ein Barcode (7) auch dann erkannt ist, wenn nach einer Methode der kleinsten Abweichungen der Edge-to-Edge-Abstände ($e_1$) bezüglich den Breiten der Elemente der Codeelemente eines Barcodes (7) wenigstens ein Codeelement den Folge der Edge-to-Edge-Abstände ($e_1$) zugeordnet werden kann, und wenn die restlichen Codeelemente jeweils einer Folge von Edge-to-Edge-Abständen ($e_1$) dadurch zugeordnet werden können, dass den jeweiligen Edge-to-Edge-Abständen ($e_1$) innerhalb vorgegebener Toleranzgrenzen mit den Breiten der Elemente des jeweiligen Codeelements übereinstimmen.

2. Optischer Sensor (1) nach Anspruch 1, **dadurch gekennzeichnet, dass** dieser als Sendereinheit eine Beleuchtungseinheit (4) und als Empfängereinheit einen Bildsensor (5) aufweist.

3. Optischer Sensor (1) nach Anspruch 1, **dadurch gekennzeichnet, dass** dieser als Sendereinheit einen Sender (8) und als Empfängereinheit einen Empfänger (9) aufweist, wobei vom Sender (8) emittierte Lichtstrahlen (3) mittels einer Ablenkeinheit (10) abgelenkt und periodisch innerhalb eines Erfassungsbereichs geführt sind.

4. Optischer Sensor (1) nach einem der Ansprüche 1 bis 3, **dadurch gekennzeichnet, dass** ein Edge-to-Edge-Abstand ($e_1$) durch zwei aufeinanderfolgende Signalzustandsänderungen gleicher Richtung definiert ist.

5. Optischer Sensor (1) nach einem der Ansprüche 1 bis 4, **dadurch gekennzeichnet, dass** in der Auswerteeinheit (6) mehrere Decodiertabellen für unterschiedliche Barcodes (7) gespeichert sind.

6. Verfahren zur Erfassung von Barcodes (7) mittels eines optischen Sensors (1) zur Erfassung von 4-Breiten-Barcodes (7) mit einer Lichtstrahlen (3) empfangenden Empfängereinheit, mit einer Auswerteeinheit (6), in welcher Empfangssignale der Empfängereinheit ausgewertet werden, wobei jeder Barcode (7) eine Folge von Codeelementen mit Elementen vorgegebener Breiten aufweist, wobei die Breiten der Elemente Codeelemente jedes Barcodes (7) in Form einer Decodiertabelle in der Auswerteeinheit (6) abgespeichert sind, wobei in der Auswerteeinheit (6) aus den Empfangssignalen der Empfängereinheit ein digitales Signal generiert wird, wobei Kantenlagen von Codeelementen durch Wechsel von Signalzuständen des digitalen Signals detektiert werden, und wobei ein von einem Abstand benachbarter Kantenlagen gebildete Folge von Edge-to-Edge-Abstand ($e_1$) einem Codeelement zugeordnet wird, wenn diese Folge von Edge-to-Edge-Abständen ($e_1$) innerhalb vorgegebener Toleranzgrenzen mit den Breiten der Elemente dieses Codeelements übereinstimmt und wobei ein Barcode (7) dann erkannt ist, wenn jedem Codeelement des Barcodes (7) eine Folge von Edge-to-Edge-Abständen ($e_1$) zugeordnet werden kann, **dadurch gekennzeichnet, dass** der optische Sensor (1) eine Lichtstrahlen (3) emittierende Sendereinheit umfasst, und dass ein Barcode (7) auch dann erkannt ist, wenn nach einer Methode der kleinsten Abweichungen der Edge-to-Edge-Abstände ($e_1$) bezüglich den Breiten der Elemente der Codeelemente eines Barcodes (7) wenigstens ein Codeelement den Folge der Edge-to-Edge-Abstände ($e_1$) zugeordnet werden kann, und wenn die restlichen Codeelemente jeweils einer Folge von Edge-to-Edge-Abständen ($e_1$) dadurch zugeordnet werden können, dass den jeweiligen Edge-to-Edge-Abständen ($e_1$) innerhalb vorgegebener Toleranzgrenzen mit den Breiten der Elemente des jeweiligen Codeelements übereinstimmen.

7. Verfahren nach Anspruch 6, **dadurch gekennzeichnet, dass** eine Zuordnung eines Codeelements eines Barcodes (7) zu der Folge von Edge-to-Edge-Abständen ($e_1$) nach der Methode der kleinsten quadratischen Abweichungen erfolgt.

8. Verfahren nach Anspruch 6, **dadurch gekennzeichnet, dass** eine Zuordnung eines Codeelements eines Barcodes (7) zu der Folge von Edge-to-Edge-Abständen ($e_1$) nach der Methode der betragsmäßig kleinsten Abweichungen erfolgt.

9. Verfahren nach einem der Ansprüche 6 bis 8, **dadurch gekennzeichnet, dass** ein Barcode (7) nur dann erkannt ist, wenn maximal ein Codeelement nach der Methode der kleinsten Abweichungen erfasst wird.

10. Verfahren nach einem der Ansprüche 6 bis 9, **dadurch gekennzeichnet, dass** zur Berechnung der kleinsten Abweichungen mittels Abweichungsfunktionen für Codeelemente Abweichungskoeffizienten berechnet werden, wobei das Codeelement als erkannt ausgewählt wird, welches den kleinsten Abweichungskoeffizient liefert.

11. Verfahren nach Anspruch 10, **dadurch gekennzeichnet, dass** ein Codeelement nur dann als erkannt gilt, wenn dessen Abweichungskoeffizient einen vorgegebenen Schwellwert nicht überschreitet.

12. Verfahren nach einem der Ansprüche 10 oder 11, **dadurch gekennzeichnet, dass** für alle Codeelemente eines Barcodes (7) Abweichungskoeffizienten berechnet werden.

13. Verfahren nach einem der Ansprüche 10 oder 11, **dadurch gekennzeichnet, dass** nur für einen Teil der Codeelemente eines Barcodes (7) Abweichungskoeffizienten berechnet werden.

14. Verfahren nach Anspruch 13, **dadurch gekennzeichnet, dass** nur für die Codeelemente Abweichungskoeffizienten berechnet werden, für welche die Summen der Differenzen der Edge-to-Edge-Abstände ($e_1$) und der Breiten der Elemente der Codeelemente einen vorgegebenen Schwellwert nicht überschreiten.

**Claims**

1. Optical sensor (1) for detecting 4-width barcodes (7) with a receiver unit that receives light beams (3), with an evaluation unit (6) in which reception signals from the receiver unit are evaluated, each barcode (7) having a sequence of code elements with elements of predetermined widths, the widths of the elements of code elements of each barcode (7) being stored in the evaluation unit (6) in the form of a decoding table, in which (6) generates a digital signal from the received signals of the receiver unit, wherein edge positions of code elements are detected by changes in signal states of the digital signal, and wherein a sequence of edge-to-edge distances ($e_1$) formed by a distance between adjacent edge positions is assigned to a code element if this sequence of edge-to-edge distances ($e_1$) corresponds to the widths of the elements of this code element within specified tolerance limits, and wherein a barcode (7) is recognised when a sequence of edge-to-edge distances ($e_1$) can be assigned to each code element of the barcode (7), **characterised in that the** optical sensor (1) comprises a transmitter unit emitting light beams (3), and **in that** a barcode (7) is also recognised in the evaluation unit if, according to a method of least deviations of the edge-to-edge distances ($e_1$) with respect to the widths of the elements of the code elements of a barcode (7), at least one code element can be assigned to the sequence of edge-to-edge distances ($e_1$), and if the remaining code elements can each be assigned to a sequence of edge-to-edge distances ($e_1$) that the respective edge-to-edge distances (ei) correspond to the widths of the elements of the respective code element within specified tolerance limits.

2. Optical sensor (1) according to claim 1, **characterised in that** it has an illumination unit (4) as a transmitter unit and an image sensor (5) as a receiver unit.

3. Optical sensor (1) according to claim 1, **characterised in that** it has a transmitter (8) as a transmitter unit and a receiver (9) as a receiver unit, wherein light beams (3) emitted by the transmitter (8) are deflected by means of a deflection unit (10) and periodically guided within a detection range.

4. Optical sensor (1) according to one of claims 1 to 3, **characterised in that** an edge-to-edge distance ($e_1$) is defined by two successive signal state changes in the same direction.

5. Optical sensor (1) according to one of claims 1 to 4, **characterised in that** several decoding tables for different barcodes (7) are stored in the evaluation unit (6).

6. Method for detecting barcodes (7) using an optical sensor (1) for detecting 4-width barcodes (7) with a receiver unit that receives light beams (3), with an evaluation unit (6) in which reception signals from the receiver unit are evaluated, each barcode (7) having a sequence of code elements with elements of predetermined widths, the widths of the elements of code elements of each barcode (7) being stored in the evaluation unit (6) in the form of a decoding table, a digital signal being generated in the evaluation unit (6) generates a digital signal from the received signals of the receiver unit, whereby edge positions of code elements are detected by changes in signal states of the digital signal, and wherein a sequence of edge-to-edge distances ($e_1$) formed by a distance between adjacent edge positions is assigned to a code element if this sequence of edge-to-edge distances ($e_1$) corresponds within predetermined tolerance limits to the widths of the elements of this code element, and wherein a barcode (7) is recognised when a sequence of edge-to-edge distances ($e_1$) can be assigned to each code element of the barcode (7), **characterised in that** the optical sensor (1) comprises a transmitter unit emitting light beams (3), and **in that** a barcode (7) is also recognised if, according to a method of least deviations, the edge-to-edge distances ($e_1$) can be assigned to the widths of the elements of the code elements of a barcode (7), at least one code element can be assigned to the sequence of edge-to-edge distances ($e_1$), and if the remaining code elements can each be assigned to a sequence of edge-to-edge distances (ei) in such a way that the respective edge-to-edge distances ($e_1$) correspond to the widths of the elements of the respective code element within predetermined tolerance limits.

7.  Method according to claim 6, **characterised in that** an assignment of a code element of a barcode (7) to the sequence of edge-to-edge distances ($e_1$) is performed using the method of least squares.

8.  Method according to claim 6, **characterised in that** a code element of a barcode (7) is assigned to the sequence of edge-to-edge distances ($e_1$) using the method of least squares.

9.  Method according to one of claims 6 to 8, **characterised in that** a barcode (7) is only recognised if a maximum of one code element is detected using the method of least squares.

10. Method according to one of claims 6 to 9, **characterised in that** deviation coefficients are calculated for code elements using deviation functions in order to calculate the smallest deviations, whereby the code element that provides the smallest deviation coefficient is selected as recognised.

11. Method according to claim 10, **characterised in that** a code element is only considered to be recognised if its deviation coefficient does not exceed a predetermined threshold value.

12. Method according to one of claims 10 or 11, **characterised in that** deviation coefficients are calculated for all code elements of a barcode (7).

13. Method according to one of claims 10 or 11, **characterised in that** deviation coefficients are calculated only for some of the code elements of a barcode (7).

14. Method according to claim 13, **characterised in that** deviation coefficients are calculated only for those code elements for which the sums of the differences between the edge-to-edge distances ($e_1$) and the widths of the elements of the code elements do not exceed a predetermined threshold value.

## Revendications

1.  Capteur optique (1) pour détecter des codes à barres à 4 largeurs (7) avec une unité de réception qui reçoit des faisceaux lumineux (3), avec une unité d'évaluation (6) dans laquelle les signaux de réception provenant de l'unité de réception sont évalués, chaque code à barres (7) comportant une séquence d'éléments de code avec des éléments de largeurs prédéterminées, les largeurs des éléments de code de chaque code à barres (7) étant stockées dans l'unité d'évaluation (6) sous la forme d'une table de décodage, dans laquelle (6) génère un signal numérique à partir des signaux reçus de l'unité de réception, dans lequel les positions des bords des éléments de code sont détectées par des changements d'état du signal numérique, et dans lequel une séquence de distances de bord à bord ($e_1$) formée par une distance entre des positions de bords adjacents est attribuée à un élément de code si cette séquence de distances de bord à bord ($e_1$) correspond aux largeurs des éléments de cet élément de code dans des limites de tolérance spécifiées, et dans lequel un code-barres (7) est reconnu lorsqu'une séquence de distances de bord à bord ($e_1$) peut être attribuée à chaque élément de code du code-barres (7), **caractérisé en ce que le** capteur optique (1) comprend une unité émettrice émettant des faisceaux lumineux (3), et **en ce qu'**un code-barres (7) est également reconnu dans l'unité d'évaluation si, selon une méthode des moindres écarts des distances de bord à bord ($e_1$) par rapport aux largeurs des éléments des éléments de code d'un code-barres (7), au moins un élément de code peut être attribué à la séquence de distances de bord à bord ($e_1$), et si les éléments de code restants peuvent chacun être attribués à une séquence de distances de bord à bord ($e_1$) de sorte que les distances respectives entre les bords ($e_1$) correspondent aux largeurs des éléments de l'élément de code respectif dans des limites de tolérance spécifiées.

2.  Capteur optique (1) selon la revendication 1, **caractérisé en ce qu'**il comporte une unité d'éclairage (4) comme unité émettrice et un capteur d'image (5) comme unité réceptrice.

3.  Capteur optique (1) selon la revendication 1, **caractérisé en ce qu'**il comporte un émetteur (8) comme unité d'émission et un récepteur (9) comme unité de réception, dans lequel des faisceaux lumineux (3) émis par l'émetteur (8) sont déviés au moyen d'une unité de déviation (10) et guidés périodiquement dans une plage de détection.

4.  Capteur optique (1) selon l'une des revendications 1 à 3, **caractérisé en ce qu'**une distance bord à bord ($e_1$) est

définie par deux changements successifs d'état du signal dans la même direction.

5. Capteur optique (1) selon l'une des revendications 1 à 4, **caractérisé en ce que** plusieurs tables de décodage pour différents codes à barres (7) sont stockées dans l'unité d'évaluation (6).

6. Procédé de détection de codes à barres (7) à l'aide d'un capteur optique (1) pour détecter des codes à barres (7) à 4 largeurs avec une unité de réception qui reçoit des faisceaux lumineux (3), avec une unité d'évaluation (6) dans laquelle les signaux de réception provenant de l'unité de réception sont évalués, chaque code à barres (7) comportant une séquence d'éléments de code avec des éléments de largeurs prédéterminées, les largeurs des éléments de code de chaque code-barres (7) étant stockées dans l'unité d'évaluation (6) sous la forme d'une table de décodage, un signal numérique étant généré dans l'unité d'évaluation (6) à partir des signaux reçus de l'unité de réception, les positions des bords des éléments de code étant détectées par des changements d'état du signal numérique, et une séquence de distances de bord à bord ($e_1$) formée par une distance entre des positions de bord adjacentes est attribuée à un élément de code si cette séquence de distances de bord à bord ($e_1$) correspond, dans des limites de tolérance prédéterminées, aux largeurs des éléments de cet élément de code, et dans lequel un code-barres (7) est reconnu lorsqu'une séquence de distances de bord à bord ($e_1$) peut être attribuée à chaque élément de code du code-barres (7), **caractérisé en ce que** le capteur optique (1) comprend une unité émettrice émettant des faisceaux lumineux (3), et **en ce qu'**un code-barres (7) est également reconnu si, selon une méthode des moindres écarts, les distances bord à bord ($e_1$) peuvent être attribuées aux largeurs des éléments des éléments de code d'un code-barres (7), au moins un élément de code peut être attribué à la séquence de distances bord à bord ($e_1$), et si les éléments de code restants peuvent chacun être attribués à une séquence de distances bord à bord ($e_1$) de telle sorte que les distances bord à bord respectives ($e_1$) correspondent aux largeurs des éléments de l'élément de code respectif dans des limites de tolérance prédéterminées.

7. Procédé selon la revendication 6, **caractérisé en ce qu'**une attribution d'un élément de code d'un code-barres (7) à la séquence de distances bord à bord ($e_1$) est effectuée à l'aide de la méthode des moindres carrés.

8. Procédé selon la revendication 6, **caractérisé en ce qu'**un élément de code d'un code-barres (7) est attribué à la séquence de distances bord à bord ($e_1$) à l'aide de la méthode des moindres carrés.

9. Procédé selon l'une des revendications 6 à 8, **caractérisé en ce qu'**un code-barres (7) n'est reconnu que si un maximum d'un élément de code est détecté à l'aide de la méthode des moindres carrés.

10. Procédé selon l'une des revendications 6 à 9, **caractérisé en ce que** des coefficients d'écart sont calculés pour des éléments de code à l'aide de fonctions d'écart afin de calculer les écarts les plus faibles, l'élément de code qui fournit le coefficient d'écart le plus faible étant sélectionné comme reconnu.

11. Procédé selon la revendication 10, **caractérisé en ce qu'**un élément de code n'est considéré comme reconnu que si son coefficient d'écart ne dépasse pas une valeur seuil prédéterminée.

12. Procédé selon l'une des revendications 10 ou 11, **caractérisé en ce que** des coefficients d'écart sont calculés pour tous les éléments de code d'un code-barres (7).

13. Procédé selon l'une des revendications 10 ou 11, **caractérisé en ce que** les coefficients d'écart ne sont calculés que pour certains des éléments de code d'un code-barres (7).

14. Procédé selon la revendication 13, **caractérisé en ce que** les coefficients d'écart ne sont calculés que pour les éléments de code pour lesquels les sommes des différences entre les distances bord à bord ($e_1$) et les largeurs des éléments des éléments de code ne dépassent pas une valeur seuil prédéterminée.

**Fig. 1**

**Fig. 2**

EP 4 390 758 B1

Fig. 3

12    12

11    11    11

E₁    E₃

E₂    E₄

p

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060213999 A1
- US 20060038017 A1
- US 20130068841 A1
- DE 102019217960 A1